Europäisches Patentamt

European Patent Office

Office européen des brevets

(19)

(11) Publication number: **0 175 273**
A1

## (12) EUROPEAN PATENT APPLICATION

(21) Application number: 85111484.3

(22) Date of filing: 11.09.85

(51) Int. Cl.⁴: **F 16 B 13/06,** F 16 B 21/18

(30) Priority: 17.09.84 IT 4163084

(43) Date of publication of application: 26.03.86 Bulletin 86/13

(84) Designated Contracting States: **AT BE CH DE FR GB LI LU NL SE**

(71) Applicant: **Morassutti, Paolo Giovanni, Via S. Martino e Solferino 103, I-35100 Padova (IT)**

(72) Inventor: **Morassutti, Paolo Giovanni, Via S. Martino e Solferino 103, I-35100 Padova (IT)**

(74) Representative: **Modiano, Guido et al, MODIANO, JOSIF, PISANTY & STAUB Modiano & Associati Via Meravigli, 16, I-20123 Milan (IT)**

(54) Anchor plug of the expanding type.

(57) The anchor plug comprises a screw (5, 5a) and metal cylindrical segments (2, 3), which are externally held close together by an outside spring (4) which also acts as a washer, and are adapted to be spread apart by an expander cone (6) being pulled towards the spring (4) by actuation of the screw (5, 5a). The expander cone (6) has lugs which engage in appropriate seats (14) formed in the cylindrical segments (2, 3) to inhibit rotation of the cone with respect to the segments, as the screw is threaded therein.

ACTORUM AG

0175273

## "ANCHOR PLUG OF THE EXPANDING TYPE"

This invention relates to an anchor plug of the expanding type.

More particularly, it relates to a wall-mountable anchor plug which can be conveniently used for anchoring or fastening purposes on walls, masonry walls or articles of manufacture.

Several types of anchor plugs are available which utilize the principle of expanding a body to lock itself against the internal surface of a previously drilled hole by virtue of its enlarged size.

From the material standpoint, there are commonly used either metal plugs or plastics plugs.

Either of these plugs are suitable for effecting one or more types of anchor securement, but each infer known drawbacks such as difficulty of manufacture and/or installation.

The anchor plug of this invention has a construction and configuration designed to obviate the problems and drawbacks encountered with prior plugs, in particular metal plugs.

A consequent object of the invention is to provide an anchor plug which can engage the wall of the hole in a secure fashion.

A further object is to provide an anchor plug the component parts whereof can be held together by a single spring device.

A not unimportant object is to provide an anchor plug which is specially advantageous from the point of view of its manufacture.

These and other objects, such as will be apparent hereinafter, are achieved by an anchor plug of the expanding type according to the invention comprising an expandable body, an expander cone, and a screw, characterized in that said expandable body comprises a number of cylindrical segments, complementary to one another, adapted to be laid side-by-side, and held together by a single hood-like spring element, said segments having on their inside surfaces means for preventing rotation of said expander cone with respect to said segments upon rotation of said screw.

Further features and advantages of the invention will be apparent from the following detailed description of a preferred embodiment thereof, given herein by way of illustration and not of limitation with reference to the accompanying drawings, where:

Figure 1 is a general view of the anchor plug of this invention;

Figure 2 is a sectional view of the anchor plug taken on a longitudinal mid-plane of figure 1;

Figure 3 is a perspective view of the expander cone;

Figure 4 is a side view of one of the segments of the expanding body;

Figure 5 is a front view of the inside of an expanding body segment; and

Figure 6 shows the hood-like spring element which holds the elements of the expanding body side-by-side on the screw.

With reference to the drawing figures, the anchor

0175273

plug according to the invention comprises an expandable body 1 composed of three cylindrical segments, advantageously, three metal cylindrical segments laid side-by-side, the visible segments being indicated in the drawings at 2 and 3.

The segments are held together by a hood-'or cup-like spring element 4, which will be described hereinafter, which is adapted to encircle the metal cylindrical segments at the head end, referred to as that end of the assembled plug which is more towards the outside, as the plug 1 is being inserted into a hole prepared in a wall.

Into the central bore of said expandable body 1 composed of three cylindrical segments there fits a screw 5 which is threaded onto an expander cone 6 located at the remote end from said hood-like spring element 4.

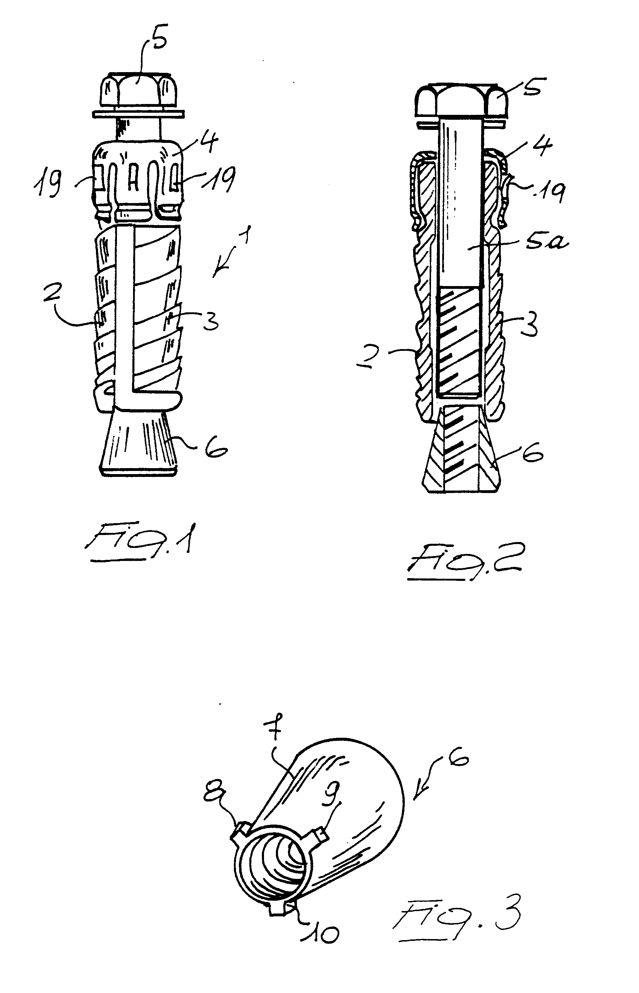

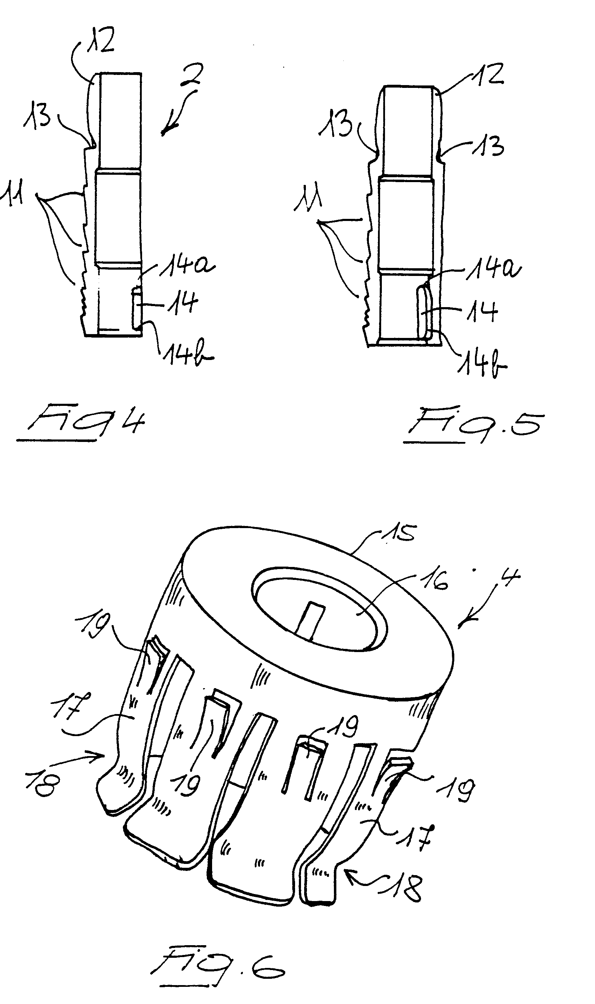

The expander cone 6 is more clearly shown in Figure 3, and comprises a frusto-conical body 7 having a diameter dimension at the minor base of the truncated cone such as to permit the same to be inserted into the space defined by the cylindrical segments which make up the expanding element 1.

On the circumference of said minor base of the frusto-conical body there are provided three nibs 8,9 and 10, respectively, which have a practically parallelepipedal shape and are advantageously arranged at 120° from one another.

Each cylindrical segment is identical to the one indicated at 2 in Figures 4 and 5.

Said cylindrical segments may be formed in practice from any material having good mechanical characteristics, the shape shown in the drawings being particularly suitable for segments of cast iron or steel.

Said segments are provided on their outer surfaces with annular elevations and grooves, indicated at 11, which are intended to improve, where required, the gripping power of the plug on the internal surface of a hole for accommodating the same.

Over that portion which is contained within said hood-like spring element 4, the segment 2 may have its outer surface tapered and rounded as indicated at 12 (Figure 4) to substantially match the shape of the interior of said hood-like spring element 4.

Said segments have on their outer portions, at the area affected by the hood-like spring element 4, an annular channel 13 onto which the hood-like element 4 will act elastically, as explained hereinafter.

The channel 13 also enables the hood 4 to be held connected to the assembly of the three segments, preventing it from accidentally disengaging.

Each cylindrical segment has internally, at the end to be affected by the expander cone 6, on one of the two walls, a guide channel 14 whereinto one of the nibs 8,9 or 10 of the expander cone 6 is adapted to fit and mutually engage in longitudinally slideable engagement relationship, as explained hereinafter.

As clearly illustrated in the drawing figures, the expander cone 6 has three nibs, indicated at 8,9 and 10, which are correspondingly positioned for sliding engagement with a corresponding channel such as the channel 14 formed in each of the individual cylindrical segments.

The insertion of the nibs into the channels prevents the expander cone 6 from turning as' it is caused to move upon an exertion of a pulling applied by actuation of the screw 5.

Said guide channels 14 have on their innermost portion a radiused region indicated at 14a which is adapted to effect disengagement of the nib from the channel upon completion of its travel in the channel 14 owing to the translation of the expander cone 6.

At the other end the channel 14 has a small stop shoulder 14b which, by blocking the head of the channel 14, prevents the cone 16 from slipping off the expanding body even in the absence of the screw 5.

Said hood-like spring element 4 is essentially composed of a base of annular shape, indicated at 15 having at a middle portion thereof a hole 16, appropriately sized to permit the body 5a of the screw 5 to be passed therethrough.

From said annulus 15, there extend in a substantially orthogonal direction with respect to a plane containing the same, a plurality of elastic arms 17 preferably having their free ends bent to define an inwardly pointing substantially "V"-like form, as indicated at 18 (Figure 6), for fitting into the channel 13 and applying the elastic thrust required to hold the cylindrical segments together.

That hood-like element 4 may be formed by a shearing and drawing process using a suitable material such as sheet steel, said hood being shaped such that on inserting the ends of the cylindrical segments therein to form the expandable body, there occurs elastic interference of the arms 17 with the individual segments, thereby said hood-like element 4 also forms a linking member for holding the whole plug assembled.

The expander cone 6, as mentioned, also has the nibs 8,9 and 10 inserted into the respective channels, and is held within the segments when assembled, by the elastic biasing force exerted by the same hood-like element 4.

Expediently, during the same operation of forming the hood-like element, there are also formed fins indicated at 19 facing outwards and having a plug rotation preventing function, because on inserting the plug into a hole, those fins 19 will interfere with the inner surface of the hole.

The elastic arms 17 of said hood-like element 4 are expediently provided in an equal or multiple number with respect to the number of segments making up the expandable body and may have all the same length or different lengths, in which case such short arms would mostly perform the function of holding the hood connected to the cylindrical segments, and such long arms would mostly function to elastically urge the segments in order to hold the assembly together.

The peculiar shape of the hood-like element 4 enables a single element to serve a number of functions required for the plug to operate properly; more specifically, it performs, as mentioned, the function of a holding or linking member in that it holds together both the expanding cylindrical segments and the expander cone; it also serves the function of an elastic member effective to provide an elastic bias to the expansion of the plug and the function of rotation preventing owing to the provision of projecting fins thereon.

The various cylindrical segments which make up the expanding body may be formed, as mentioned, from any material having good mechanical characteristics.

More specifically, the shape shown in the drawings is that which may be obtained from a casting.

However, the cylindrical segments may be expediently stamped from sheet metal.

As an alternative to the nib/ channel combination described, a rifled or knurled annulus may be provided on the hollow which acts on correspondingly rifled or knurled areas formed on the inside of each cylindrical segment.

The cone may also be formed by turning and the nibs are expediently formed by cold bending preformed lugs.

It should be noted that it is specially favorable in manufacturing to have the guide channels for the expander cone nibs located at the edge of each cylindrical segment even though, from a functional standpoint, that channel may be located on the inside surface of each segment.

From the foregoing description, it may be appreciated that all the objects set forth have been achieved, and in particular that a simple and functional expanding anchor plug has been provided.

The parts making up the plug are specially simple to manufacture, and assembling is also simplified in that a single element, i.e. the spring hood, is sufficient to hold the assembled parts together.

Of course, and as already mentioned, the materials and dimensions may be any ones contingent on individual requirements.

## CLAIMS

1. An anchor plug of the expanding type comprising an expandably body (1), an expander cone (6), and a screw (5,5a), characterized in that said expandable body (1) comprises a number of cylindrical segments (2,3), complementary to one another, adapted to be laid side-by-side, and held together by a single hood-like spring element (4), said segments (2,3) having on their inside surfaces means (8-10,14) for preventing rotation of said expander cone (6) with respect to said segments (2,3) upon rotation of said screw (5,5a).

2. An anchor plug according to Claim 1, characterized in that said cylindrical segments (2,3), have an inside longitudinal guide channel (14) each for one nib (8-10) of the expander cone (6).

3. An anchor plug according to one or more of the preceding claims, characterized in that said guide channel (14) is located preferably along one of the side edges of the segment (2,3).

4. An anchor plug according to one or more of the preceding claims, characterized in that said guide channel (14) has, toward the outermost portion, a small stop shoulder (14b), which prevents the expander cone (6) from coming out in the absence of the screw (5,5a).

5. An anchor plug according to one or more of the preceding claims, characterized in that said cylindrical segments (2,3) are formed from metal materials.

6. An anchor plug according to one or more of the preceding claims, characterized in that said expander cone (6) has a plurality of nibs (8-10) adapted to insert themselves into the channels (14) in the cylindrical segments (2,3), said nibs (8-10) forming the means which prevents the cone (6) from rotating as the screw (5,5a) is being threaded therein.

7. An anchor plug according to one or more of the preceding claims, characterized in that said hood-like spring element (4) substantially comprises an annulus (15) whence there extend, in a substantially normal direction thereto and arranged around the outer circumference, a plurality of elastic arms (17) effective to act on said cylindrical segments (2,3), with the free ends thereof.

8. An anchor plug according to one or more of the preceding claims, characterized in that said hood (4) is formed as a single piece by shearing and drawing an elastic sheet metal.

9. An anchor plug according to one or more of the preceding claims, characterized in that said hood-like spring element (4) forms the holder member for all the parts of the anchor plug (1).

10. An anchor plug according to one or more of the preceding claims, characterized in that said hood-like spring element (4) has outward facing fins (19) which form the means of preventing said anchor plug (1) from turning as it is inserted into the hole wherein it is to expand.

11. An anchor plug according to one or more of the preceding claims, characterized in that said hood-like spring element (4), by acting elastically from the outside on the various cylindrical segments (2,3) which make up the anchor plug, forms the member of elastic reaction to the expansion effective to hold together the various parts (2,3,6) of the anchor plug and also to always hold the expanding cone nibs (8-10) guided in their corresponding channels (14).

12. An anchor plug according to one or more of the preceding claims, characterized in that said elastic arms (17) have their free ends bent inwards, said bend (18) being expediently of "V"-like shape, and adapted to fit into an annular channel (13) present in said cylindrical segments (2,3) to thus provide a perfect assembly of the parts and also avoiding that the hood-like element (4) may slip off the combination of the expandable body (1).

13. An anchor plug according to Claim 1, characterized in that in a modified embodiment said expander cone (6) has a rifled or knurled annulus engaging with complementarly machine regions present on the inside portion of the cylindrical segments (2,3).

Fig.1

Fig.2

Fig.3

_Fig.4_

_Fig.5_

_Fig.6_

European Patent
Office

**EUROPEAN SEARCH REPORT**

## DOCUMENTS CONSIDERED TO BE RELEVANT

EP 85111484.3

| Category | Citation of document with indication, where appropriate, of relevant passages | Relevant to claim | CLASSIFICATION OF THE APPLICATION (Int. Cl.4) |
|---|---|---|---|
| X | EP - A1 - 0 032 702 (LEFOX S.R.L.) <br> * Claims; fig. * <br> -- | 1-3,6, 7,9 | F 16 B 13/06 <br> F 16 B 21/18 |
| A | AT - B - 255 726 (ERNST FLÜCK) <br> * Claim; page 1, lines 20-36 * <br> -- | 1 | |
| A | AT - B - 359 717 (FISCHER ARTUR DR. H.C.) <br> * Claims 1,4 * <br> -- | 1 | |
| A | US - A - 4 283 986 (FRANCIS C. PETERSON et al.) <br> * Abstract * <br> ---- | 1 | |

|  |  | TECHNICAL FIELDS SEARCHED (Int. Cl 4) |
|---|---|---|
|  |  | F 16 B |

The present search report has been drawn up for all claims

| Place of search | Date of completion of the search | Examiner |
|---|---|---|
| VIENNA | 12-11-1985 | HEIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82